Europäisches Patentamt

European Patent Office

Office européen des brevets

(11) Publication number: **0 241 051**
**A1**

## (12) EUROPEAN PATENT APPLICATION

(21) Application number: **87200207.6**

(22) Date of filing: **11.02.87**

(51) Int. Cl.⁴: **B65B 9/06**

(30) Priority: **28.02.86 NL 8600519**

(43) Date of publication of application:
**14.10.87 Bulletin 87/42**

(84) Designated Contracting States:
**DE FR GB IT NL**

(71) Applicant: **TEVOPHARM SCHIEDAM B.V.**
**P.O. Box 35 Conradstraat 4**
**NL-3100 AA Schiedam(NL)**

(72) Inventor: **Van Kogelenberg, Jacob**
**Smetanalaan 54**
**NL-3122 HR Schiedam(NL)**

(74) Representative: **van der Beek, George Frans**
**et al**
**Nederlandsch Octrooibureau Johan de**
**Wittlaan 15 P.O. Box 29720**
**NL-2502 LS 's-Gravenhage(NL)**

(54) Packaging device.

(57) Device for continuously parkaging objects (1)
presented at some distance from each other in a
tubular film wrapping, which device is provided with
means (6), which form transverse seals (7) in the
film tube between the objects (1) by means of heat
and pressure, whereby means (8, 9, 10) are present
for preheating the film tube over a certain distance
between the point where the film sheet (3) is formed
into a tube and the point where the transverse seals
(7) are produced, and in particular in a manner such
that essentially the sides of the film tube are heated
which do not face the means (6) for forming the
transverse seals (7).

fig-1

## Packaging device.

The invention relates to a device for continuously packaging objects presented at some distance from each other in a tubular film wrapping, which device is provided with means which form a sheet of film material into a tube and join the longitudinal edges to each other by means of heat and pressure, and with means which form transverse seals in the film tube between the objects by means of heat and pressure.

Such packaging devices are generally known (see, for example, Dutch Patent Application 81,01588 filed by the Applicant).

The means for forming the transverse seal in the film tube are in that case formed by a set of rotating heated jaws which, during the forming of the transverse seal, are up against each other with the film tube pinched together in between them. This is termed a rotating jaw.

Use is frequency made of circulating heated jaws which are moved towards each other and away from each other and which travel together with the continuously advancing film tube. This is a so-called circulating jaw.

In the case of rotating or circulating jaws, the time period in which heat is transferred to, and pressure exerted on, the film tube is very short.

In addition, the heat is supplied only to the sides of the film tube which face the jaws. In the case of a packaging device operating in a horizontal plane these are therefore the upper and lower surfaces of the film tube. The side surfaces are not sufficiently heated. This applies both the "gusseted" and to "non-gusseted" packagings.

In a "gusseted" packaging, the side surfaces of the film tube which project past the object to be packaged, are foled sharply inwards before a transverse seal is formed.

In forming a transverse seal, essentially only heat is supplied to the upper and lower surface of the film tube (for a horizontal packaging device). The film tube is therefore not heated to the same extent everywhere.

The rollers which close the film sheet in the longitudinal direction into a film tube and thus form a longitudinal seam also deliver heat to the film tube. This longitudinal folding of the film sheet into a film tube takes place in a so-called folding box.

The film tube emerging from the folding box will thus receive the most heat on the side of the film tube which is directed towards the longitudinal sealing rollers, i.e. from said longitudinal sealing rollers and from the jaw. The upper side receives only heat from the jaw. The siude surfaces are virtually not heated. The descriptions "lower", "upper" and "side" refer to a horizontal packaging device. However, a vertical packaging device operates in a corresponding manner.

The object of the invention is to avoid the drawbacks of uneven heating and consequently the risk of the transverse seal leaking, and this is achieved according to the invention in that means are present for preheating the film tube over a certain distance between the point where the film sheet is formed into a tube and the point where the transverse seals are produced, and in particular a manner such that essentially the sides of the film tube are heated which do not face the means for forming the transverse seals.

In this manner, the film tube is adequately heated on all sides at the transverse sealing point so as to bring about a good and leak-free transverse seal within a very short time.

The risk of "cold crack" is also avoided in this manner. "Cold crack" occurs as a result of sharply folding the film at low temperature. Sharp folding always occurs in the case of gusseted packagings. If heating is adequate, "cold crack" is also avoided.

The preheating means are preferably formed by a tunnel, open at both ends, to which hot air or another gas is supplied, through which tunnel the film tube and the objects to be packaged are advanced.

The invention will be explained in more detail on the basis of diagrammatic drawings in which:

Figure 1 is a diagrammatic longitudinal section of the packaging device according to the invention; and

Figure 2 is a section along the line II-II of fig. 1.

The packaging device shown is essentially a conventional horizontal packaging device.

The objects 1 to be packaged are presented at a certain distance from each other across a horizontal table 2.

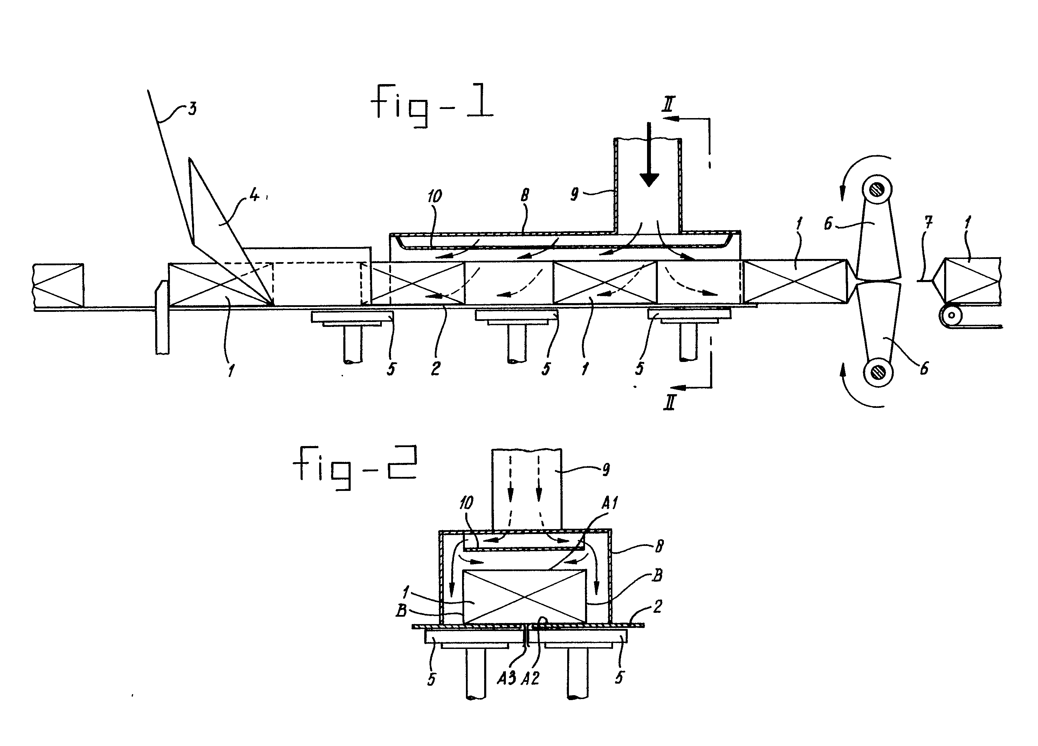

The film sheet 3 is fed through a folding box 4 and formed into a film tube which is closed to form a film tube by heated rollers 5 on the underside of the table 2, a so-called fin seal A3 being formed (see fig. 2).

A rotating heated jaw 6 serves to form a transverse seal 7 in each case between two objects 1 by means of heat and pressure, which transverse seal 7 is cut simultaneously or subsequently.

Up to this point the device is conventional. The packaging device can also operate in a vertical plane.

In a horizontal packaging device, the upper side A1 and the underside A2 of the film tube are heated during the forming of the transverse seal 7 by the two heated jaws. The underside A2 is heated in addition by the rollers 5 which form the longitudinal seam or "fin seal" A3.

The side surface B of the film tube are virtually not heated, as a result of which parts of the transverse seal 7 formed are sometimes not satifactorily sealed. The transverse seal 7 then leaks, as a result of which the packaging formed is inferior because it is not airtight. It is possible to avoid leakage only by supplying heat for much longer through jaw 6. This, however, slows down the packaging speed.

A further drawback is also that breakage of the film tube, so-called "cold crack" may occur if the film tube is sharply folded at too low a temperature. This applies therefore primarily to gusseted packagings.

According to the invention uniform heating of the foil tube is provided for at the point of the transverse seal 7 to be formed. This is achieved by providing for an all-round heating of the film tube. This can be achieved by placing a tunnel 8 over a part of the table 2 in front of the jaw 6.

Said tunnel 8 may be open at both ends and be provided with an inlet 9 of hot air under pressure.

The shape of the tunnel 8 is so chosen that a strongly eddying air current over the side surfaces 8 of the film tube is guaranteed. A beneficial length is approximately 400 mm.

The length of the tunnel 8 must be such that the preheating time is a multiple of the effective sealing time. With a tunnel length of approximately 400 mm, the preheating time for a rotating tool must be approximately 130 times the sealing time and for a circulating jaw approximately 10 times. This applies to a circulating jaw of approximately 40 mm.

The temperature of the air is adjustable. The time in which said air can deliver heat to the film tube is, for example, 1.33 sec. for a film speed of 18 m/minute.

A baffled plate 10 is fitted in the tunnel 8 and determines how much air strikes the upper surface A1 of the film tube. This baffle plate 10 assures that the sides of the film tube are adequately heated. The top and bottom of the film tube are already adequately heated.

It has been found that in this manner an airtight transverse seal 7 is obtained and that no "cold crack" occurs.

Instead of an air tunnel 8, 9, 10, it is also possible to operate with a heating element along the two sides of the film tube.

An air tunnel is, however, simple and cheap, and operates very satisfactorily.

## Claims

1. Device for continuously packaging objects presented at some distance from each other in a tubular film wrapping, which device is provided with means which form a sheet of film material (3) into a tube and join the longitudinal edges (A3) to each other by means of heat and pressure and with means (6) which form thransverse seals (7) in the film tube tween the objects (11) by means of heat and pressure, **characterized** in that means (8, 9, 10) are present for preheating the film tube over a certain distance between the point where the film sheet (3) is formed into a tube and the point where the transverse seals (7) are produced, and in particular in a manner such that essentially the sides of the film tube are heated which do not face the means (6) for forming the transverse seals (7).

2. Device according to claim 1, **characterized** in that the preheating means are formed by a tunnel (8), open at both ends, to which hot air of another gas is supplied, through which (8) tunnel the film tube and the objects (1) to be packaged are advanced, the tunnel (8) being fitted with guide means (10) which guide the hot air or other gas essentially to the required sides of the film tube.

3. Device according to claim 1 or 2, **characterized** in that the heating means are formed by heating elements fitted along the required sides of the film tube.

Fig-1

Fig-2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 027 407 (KAWASAKI) <br> * Abstract; page 3, lines 3-48; figures 8,14E * | 1,3 | B 65 B    9/06 |
| | --- | | |
| A | GB-A-1 197 130 (LA CELLOPHANE) <br> * Page 3, lines 52-64; figures 1,2 * | 2 | |
| | ----- | | |

TECHNICAL FIELDS
SEARCHED (Int. Cl.4)

B 65 B

The present search report has been drawn up for all claims

| Place of search | Date of completion of the search | Examiner |
|---|---|---|
| THE HAGUE | 05-06-1987 | CLAEYS H.C.M. |